# EUROPÄISCHE PATENTSCHRIFT

(11) **EP 2 223 841 B1**
(45) Veröffentlichungstag und Bekanntmachung des Hinweises auf die Patenterteilung: **29.02.2012**
(21) Anmeldenummer: 10151822.3
(22) Anmeldetag: 27.01.2010
(51) Int. Cl.: B61D 17/04, B61D 17/08, B61D 1/00

(54) **Überlanger Wagenkasten für Schienenfahrzeuge und daraus aufgebauter Triebzug**
Car body with excess length for rail vehicles and motor coach train composed of these vehicles
Caisse allongée pour véhicules ferroviaires et train automoteur composé de ces véhicules

(30) Priorität: 26.02.2009 DE 102009010377
(43) Veröffentlichungstag der Anmeldung: 01.09.2010
(73) Patentinhaber: Siemens Aktiengesellschaft, 80333 München (DE)
(72) Erfinder: Cuylen, Jens, 41379, Brüggen (DE); Gansekow, Roger, 47906, Kempen (DE); Lübben, Edzard, 91056, Erlangen (DE); Offer, Martin, 91365, Weilersbach (DE); Schaefer-Enkeler, Andreas, 91341, Röttenbach (DE)

(56) Entgegenhaltungen:
- EP-A1- 0 599 235
- EP-A1- 1 566 322
- DE-U1- 29 816 609

## Beschreibung

Die Erfindung bezieht sich auf einen Wagenkasten für ein mehrteiliges Schienenfahrzeug mit zwei, jeweils endseitigen Drehgestellen sowie auf einen aus solchen Wagenkästen aufgebauten Triebzug.

Solch ein Schienenfahrzeug ist aus der EP 1 566 322 A1 bekannt.

Bei der Entwicklung mehrteiliger Schienenfahrzeuge, insbesondere auch Triebzüge, steht generell im Vordergrund, eine Nutzfläche für Sitzplätze sowie einen Fahrgastkomfort zu maximieren. Für das Beispiel eines sog. "TSI-Zuges", der eine Länge von ca. 200m hat, sind bisher entweder Wagenkästen einer Länge von ca. 25m eingesetzt worden, so dass sich der besagte Zug aus acht solcher Wagenkästen aufbauen ließ. Oder der Zug wurde als elfteiliger Gliederzug mit ca. 17,5m langen Wagenkästen ausgeführt.

Allgemein wird bei der Entwicklung von Wagenkästen davon ausgegangen, dass eine Erhöhung der Wagenkastenlänge über ca. 25m hinaus stark zunehmende Schwierigkeiten mit sich bringt, vorgeschriebene Lichtraumprofile in Verbindung mit angemessenen Innenraumbreiten einzuhalten. Deshalb wurde bisher davon abgesehen, längere Wagenkästen als ca. 27,1m zu realisieren.

Ausgehend hiervon liegt der Erfindung die Aufgabe zugrunde, einen Wagenkasten, mit dem insbesondere bei TSI-Highspeed-Zügen einen größere Nutzfläche zur Verfügung steht, sowie einen aus solchen Wagenkästen aufgebauten Zug anzugeben.

Im Hinblick auf den Wagenkasten wird diese Aufgabe gelöst durch einen Wagenkasten für ein mehrteiliges Schienenfahrzeug mit zwei, jeweils endseitigen Drehgestellen, wobei eine Länge des Wagenkastens wenigstens 27,5m beträgt und Seitenwände des Wagenkastens so gestaltet sind, dass den größten Teil (mehr als 50%, bevorzugt mehr als 80%) der Wagenlänge eine Innenraumbreite von mindestens 2,6m bei einer maximalen Außenbreite in Wagenlängsmitte von 2,86m in Höhe von Sitzarmlehnen erreicht wird.

Durch die Länge des Wagenkastens von wenigstens 27,5m ist es möglich, insbesondere einen TSI-Hochgeschwindigkeitszug aus sieben Wagenkästen zusammenzusetzen, so dass insgesamt ein Zug einer Länge von ca. 200m entsteht. Dadurch entfällt im Vergleich zum Stand der Technik ein Wagenkasten und damit auch ein Wagenübergang, so dass sich Nutzflächenvorteile in der Größenordnung von etwa 5% ergeben können.

Eine besondere Herausforderung liegt darin, unter Berücksichtung des nach dem Merkblatt UIC505-1 vorgegebenen Profils dennoch angemessene Innenraumbreiten zu erreichen. Die Verlängerung des Wagenkastens führt bei entsprechender Vergrößerung des Drehgestell-Mittenabstandes zu einer Reduzierung der max. Außenbreite in Wagenlängsmitte auf weniger als 2,86m, bevorzugt 2,852m. Zur Erzielung eines guten Innenraumkomforts, insbesondere in 2+2-Bestuhlung, ist eine Innenraumbreite in Höhe der Armlehnen von mindestens 2.600-2650 mm zu erreichen. Um dies zu realisieren, ist es günstig, einen wenigstens in Höhe der Sitzarmlehnen bezüglich der Dicke und der Kontur optimierten Seitenwandaufbau von kleiner als 150mm, bevorzugt kleiner als 100mm, einzusetzen, der dennoch alle Eigenschaften an Wagenkastenfestigkeit, Wärmedämmung, Klimakonzept etc. erfüllt.

Ein Merkmal eines solchen Seitenwandaufbaus kann in einer bombierten Ausführung der Außenkontur liegen. Dies hat den Vorteil, dass ein vorgegebenes Lichtraumprofil optimal ausgenutzt werden kann. Insbesondere kann auch auf Höhe von Armlehnen von Fahrgastsitzen ein für die Passagiere erforderliches Komfortmaß erreicht werden. Aber auch mit ebenen Seitenwänden kann das Konzept mit einer geringfügig reduzierten Innenraumbreite dargestellt werden.

Ein weiteres Merkmal kann eine optimierte Innenraumkontur sein. Die Innenfläche der Seitenwand wird dabei in Höhe der Armlehnen und knapp darüber eingezogen (ausgehöhlt) und damit zusätzlicher Freiraum für die Arme der Passagiere im interessierenden Höhenbereich geschaffen.

Im Bereich der Wagenenden werden im Hinblick auf die optimale Ausnutzung des durch die Richtlinie UIC505-1 vorgegebenen Profils sinnvollerweise Einzüge realisiert, also die Seitenwände zu den Stirnwänden hin nach Wageninnen gezogen. Diese werden so ausgeführt, dass sie bei Vorhandensein von Türen erst an der Türsäule beginnen.

Die o.g. Aufgabe wird hinsichtlich des mehrteiligen Schienenfahrzeugs dadurch gelöst, dass jeder Wagen des Schienenfahrzeugs gemäß einem Wagenkasten der zuvor beschriebenen Art ausgeführt ist. Zum Zusammenstellen eines TSI-200m-Zuges für Hochgeschwindigkeitszwecke ist es günstig, wenn das Schienenfahrzeug sieben Wagenkästen aufweist.

Ausführungsbeispiele der Erfindung werden nachfolgend unter Bezugnahme auf die Zeichnungen noch näher erläutert. Es zeigen:
- Figur 1: eine Querschnittsansicht eines Wagenkastens für ein Schienenfahrzeug und
- Figur 2: eine schematische grafische Darstellung einer zulässigen halben Wagenkastenbreite als Funktion eines Ortes entlang einer Wagenkastenlängsachse.

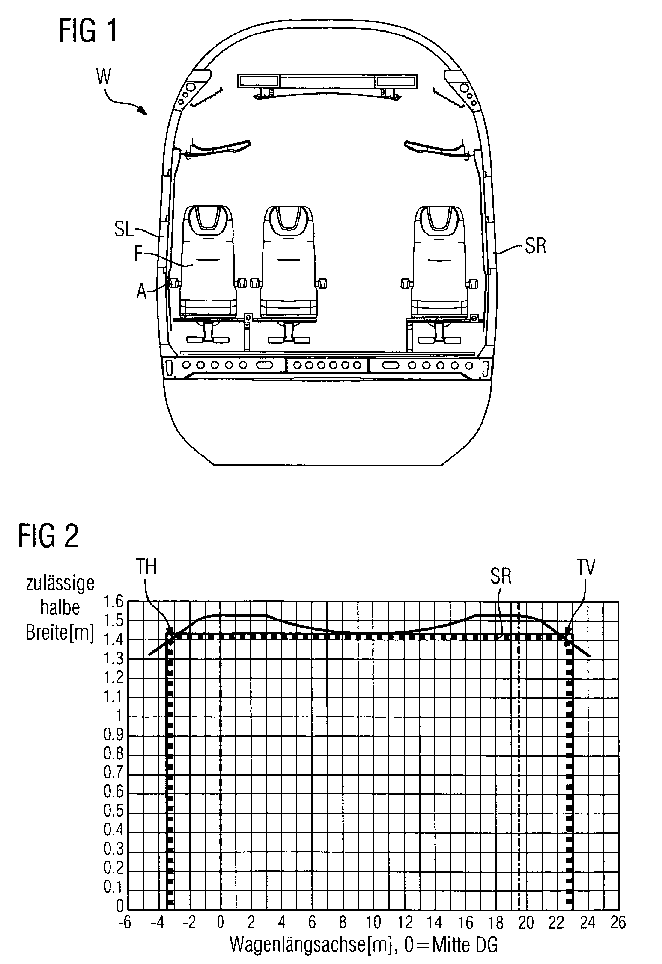

Wie aus Figur 1 ersichtlich, weist ein Wagenkasten W in diesem Fall für ein Schienenfahrzeug bombierte Seitenwände SR und SL auf. Dabei liegt eine maximale Wagenkastenbreite etwa in Höhe von Armlehnen A, die zu Fahrgastsitzen F gehören.

Die bombierte Ausführung der Seitenwände SR, SL gewährleistet, dass ein nach der Richtlinie UIC505-1 vorgegebenes Profil optimal ausgenutzt werden kann. Eine alternativ vorstellbare ebene Seitenwandkontur wäre mit einer weiter reduzierten Wanddicke verbunden.

Die grafische Darstellung von Figur 2 zeigt (obere Linie) eine zulässige halbe Breite des Wagenkastens W von Figur 1 als Funktion eines Ortes auf einer Wagenlängsachse. Dabei ist ein Nullpunkt durch die Mitte eines der Drehgestelle festgelegt. In Fig. 2 ist mit gepunkteter Linie der Umriss des Wagenkastens W und mit gestrichelten Linien die Lage der Drehgestellmitten dargestellt. Als Referenz ist in Figur 2 in der Form eines Rechtecks ein Wagenkasten einer Breite von 2,85m dargestellt. Diese Breite wird über nahezu die gesamte Wagenkastenlänge geführt. An den Wagenenden verläuft die Seitenwand SR in Richtung auf zugeordnete Stirnseiten nach Innen, um die Einhaltung der Profilgrenzlinie zu gewährleisten. Anders ausgedrückt: Im Bereich von Überhängen, d.h. denjenigen Teilen des Wagenkastens, die über das Fahrwerk hinaus gehen, verläuft die Seitenwand SR schräg nach Innen.

Aus Figur 2 geht außerdem die Lage von Türbereichen TV, TH hervor. Diese liegen im Bereich der Überhänge, d.h. hier verlaufen die Seitenwände SR, SL schräg. In den Türbereichen TH, TV finden sich Einstiegstüren des Wagenkastens W.

Die einzelnen Wagenkästen W sind über gegenüber einem kürzeren Standardwagen mit verlängerten Kupplungen und Wagenübergängen ausgestattet, um die aufgrund der größeren Wagenkastenüberhänge größeren Querbewegungen abzubilden.

Da der Wagenkasten W gegenüber bekannten Wagenkästen schmaler ist, erscheint es sinnvoll, einen Spalt zwischen dem Wagenkasten W und einem Bahnsteig durch einen Schiebetritt (oder einen Klapptritt) zu überwinden. Dieser Schiebetritt sollte eine Ausfahrbreite von ca. 0,25m haben und kann über eine Sensorik eine Kollision mit einem Bahnsteig vermeiden. Für die Bemessung des Schiebetritts ist die Vorschrift "TSI-PRM" und die Norm "UIC505" einschlägig.

Der anhand der Figuren 1 und 2 erläuterte Wagenkasten W weist folgende Kennzahlen auf:
Wagenlänge: 27,95m; Drehgestell-Mittenabstand: 19,5m.

Aus dem so ausgeführten Wagenkasten W lässt sich ein TSI-Hochgeschwindigkeitszug bilden, wobei sieben solcher Wagenkästen W zu einem Zug zusammengestellt werden. Kennzeichen eines solchen Zuges sind: Wagenübergangslänge: 0,8m; Anzahl Wagenübergänge: 6; aerodynamische Verlängerung von Kopfwagen: 0,775m; Anzahl der Verlängerungen: 2. Daraus ergibt sich eine Gesamtzuglänge von 202m.

Die Seitenwände SR, SL sind in Höhe der Armlehnen (A) von einer Dicke von weniger als 100mm. Die Seitenwände SR, SL können im darüber und darunter liegenden Bereich eine höhere Dicke aufweisen. Abhängig von anderweitig getroffenen Maßnahmen kann es auch ausreichen, dass die Seitenwanddicke in Höhe der Armlehnen A geringer als 150mm ist.

Im dargestellten Ausführungsbeispiel beträgt die maximale Außenbreite des Wagenkastens in Wagenlängsmitte 2,852m. Insgesamt ist es zur Einhaltung der o. g. Norm günstig, wenn die Wagenkastenbreite den Wert von 2,86m nicht überschreitet.

Der auf diese Weise ausgeführte Wagenkasten (W) gewährleistet eine Innenraumbreite von wenigstens 2600mm, wobei auch der Wert von 2650mm übertroffen werden kann.

## Patentansprüche

1. Wagenkasten (W) für ein mehrteiliges Schienenfahrzeug mit zwei, jeweils endseitigen Drehgestellen,
**dadurch gekennzeichnet, dass**
eine Länge des Wagenkastens (W) wenigstens 27,5m beträgt und Seitenwände (SR, SL) des Wagenkastens (W) so gestaltet sind, dass den größten Teil der Wagenlänge eine Innenraumbreite von mind. 2,6m bei einer maximalen Außenbreite in Wagenlängsmitte von 2,86m in Höhe von Sitzarmlehnen (A) erreicht wird.

2. Wagenkasten (W) nach Anspruch 1,
**dadurch gekennzeichnet, dass**
eine Dicke der Seitenwände (SR, SL) in Höhe der Sitzarmlehnen (A) kleiner als 150mm, bevorzugt kleiner als 100mm ist.

3. Wagenkasten (W) nach Anspruch 1 oder 2,
**dadurch gekennzeichnet, dass**
die Seitenwände (SR, SL) in Türbereichen (TV, TH) zum Wagenende hin eingezogen sind.

4. Wagenkasten (W) nach einem der Ansprüche 1 bis 3,
**dadurch gekennzeichnet, dass**
die Seitenwände (SR, SL) bombiert ausgeführt sind.

5. Wagenkasten (W) nach einem der Ansprüche 1 bis 4,
**dadurch gekennzeichnet, dass**
die Seitenwände (SR, SL) auf der Innenseite in Höhe der Armlehnen (A) eingezogen ausgeführt sind, so dass hier eine höhere Wageninnenraumbreite als im darunter und darüber liegenden Bereich der Seitenwände (SR, SL) des Wagenkastens (W) vorliegt.

6. Wagenkasten (W) nach einem der Ansprüche 1 bis 5,
**dadurch gekennzeichnet, dass**
Türbereiche (TV, TH) mit Schiebetritten ausgestattet sind.

7. Mehrteiliges Schienenfahrzeug mit einer Anzahl Wagenkästen, **dadurch gekennzeichnet, dass**
jeder Wagenkasten (W) gemäß einem Wagenkasten (W) nach einem der Ansprüche 1 bis 4 ausgeführt ist.

8. Mehrteiliges Schienenfahrzeug nach Anspruch 7,
**dadurch gekennzeichnet, dass**
es sieben Wagenkästen (W) aufweist.

## Claims

1. Coach body (W) for a multiple-unit railway vehicle having two bogies at each end, **characterized in that** the coach body (W) has a length of at least 27.5 m and side walls (SR, SL) of the coach body (W) are developed such that, with a maximum outside width in the longitudinal center of the coach of 2.86 m at the height of seat arm rests (A), an inside width of at least 2.6 m is achieved for the greatest part of the coach length.

2. Coach body (W) according to Claim 1, **characterized in that** a thickness of the side walls (SR, SL) at the height of the seat arm rests (A) is less that 150 mm, preferably less than 100 mm.

3. Coach body (W) according to Claim 1 or 2, **characterized in that** the side walls (SR, SL) in the door regions (TV, TH) are drawn in towards the end of the coach.

4. Coach body (W) according to one of Claims 1 to 3, **characterized in that** the side walls (SR, SL) are bowed.

5. Coach body (W) according to one of Claims 1 to 4, **characterized in that** the side walls (SR, SL) are drawn in on the inside at the height of the arm rests (A) such that the width of the coach interior is greater here than in the region of the side walls (SR, SL) of the coach body (W) lying below and above this region.

6. Coach body (W) according to one of Claims 1 to 5, **characterized in that** door regions (TV, TH) are provided with retractable steps.

7. Multiple-unit railway vehicle having a number of coach bodies, **characterized in that** each coach body (W) is realized in accordance with a coach body (W) according to one of Claims 1 to 4.

8. Multiple-unit railway vehicle according to Claim 7, **characterized in that** said railway vehicle comprises seven coach bodies (W).

## Revendications

1. Caisse ( W ) pour un véhicule ferroviaire à unités multiples, comprenant deux boggies, respectivement du côté de l'extrémité,
**caractérisée en ce que**
une longueur de la caisse ( W ) est d'au moins 27,5 m et des parois ( SR, SL ) latérales de la caisse (W) sont telles que, dans la plus grande partie de la longueur de la caisse, une largeur de l'espace intérieur d'au moins 2,6 m, pour une largeur extérieure maximum dans le milieu longitudinal de la caisse de 2,86 m au niveau d'accotoirs ( A ) de siège, est atteinte.

2. Caisse ( W ) suivant la revendication 1,
**caractérisée en ce que**
une épaisseur des parois ( SR, SL ) latérales au niveau des accotoirs ( A ) de siège est plus petite que 150 mm, de préférence plus petite que 100 mm.

3. Caisse ( W ) suivant la revendication 1 ou 2,
**caractérisée en ce que**
les parois ( SR, SL ) latérales sont, dans des zones ( TV, TH ) de porte, rentrées vers l'extrémité de la caisse.

4. Caisse ( W ) suivant l'une des revendications 1 à 3,
**caractérisée en ce que**
les parois ( SR, SL ) latérales sont bombées.

5. Caisse ( W ) suivant l'une des revendications 1 à 4,
**caractérisée en ce que**
les parois ( SR, SL) latérales sont, du côté intérieur, rentrées au niveau des accotoirs ( A ), de manière à y avoir une largeur de l'espace intérieur de la caisse plus grande que dans la zone en dessous et au-dessus des parois ( SR, SL ) latérales de la caisse ( W ).

6. Caisse ( W ) suivant l'une des revendications 1 à 5,
**caractérisée en ce que**
des zones ( TV, TH ) de porte sont équipées de marches coulissantes.

7. Véhicule ferroviaire à unité multiple, comprenant un certain nombre de caisses, **caractérisé en ce que**
chaque caisse ( W ) est réalisée conformément à une caisse ( W ) suivant l'une des revendications 1 à 4.

8. Véhicule ferroviaire à unité multiple suivant la revendication 7,
**caractérisé en ce que**
il a sept caisses ( W ).
